# EUROPEAN PATENT SPECIFICATION

(11) **EP 3 552 260 B1**
(45) Date of publication and mention of the grant of the patent: **11.10.2023**
(21) Application number: 17809307.6
(22) Date of filing: 07.12.2017
(51) Int. Cl.: H01M 4/36, H01M 4/505, H01M 4/525, H01M 4/62, H01M 10/052, H01M 10/0562, H01M 10/0565

(54) **LINKER-FUNCTIONALIZED CATHODES FOR SOLID STATE BATTERIES**
LINKER-FUNKTIONALISIERTE KATHODEN FÜR FESTKÖRPERBATTERIEN
CATHODES FONCTIONNALISÉES PAR UN LIEUR POUR BATTERIES À L'ÉTAT SOLIDE

(30) Priority: 07.12.2016 US 201662431007 P
(43) Date of publication of application: 16.10.2019
(73) Proprietor: Robert Bosch GmbH, 70442 Stuttgart (DE)
(72) Inventor: CHRISTENSEN, John F., Elk Grove, California 95758 (US); HELLSTROM, Sondra, Menlo Park, California 94025 (US); EITOUNI, Hany, Oakland, California 94618 (US); KOZINSKY, Boris, Waban, Massachusetts 02468 (US)
(86) International application number: PCT/EP2017/081776
(87) International publication number: WO 2018/104423

(56) References cited:
- WO-A1-2015/190250
- US-A1- 2012 021 298
- US-A1- 2013 302 681
- US-A1- 2014 050 980
- US-A1- 2016 301 063
- WOOSUK CHO ET AL: "Improved electrochemical and thermal properties of nickel rich LiNi 0.6 Co 0.2 Mn 0.2 O 2 cathode materials by SiO 2 coating", JOURNAL OF POWER SOURCES, vol. 282, 26 December 2014 (2014-12-26), pages 45-50, XP055453907, CH ISSN: 0378-7753, DOI: 10.1016/j.jpowsour.2014.12.128
- HOU MENGYAN ET AL: "Enhanced electrochemical performance of Li-rich layered cathode materials by surface modification with P2O5", ELECTROCHEMISTRY COMMUNICATIONS, vol. 49, 29 October 2014 (2014-10-29), pages 83-87, XP029097619, ISSN: 1388-2481, DOI: 10.1016/J.ELECOM.2014.10.009
- Anonymous: "Hexamethyldisilazan - Wikipedia", , 20 August 2016 (2016-08-20), XP055454582, Retrieved from the Internet: URL:https://de.wikipedia.org/w/index.php?t itle=Hexamethyldisilazan&oldid=157199441 [retrieved on 2018-02-27]

## Description

### TECHNICAL FIELD

Embodiments pertain to batteries. More particularly, embodiments pertain to linker-functionalized cathodes of solid state batteries, such as lithium-ion batteries.

### BACKGROUND

Current Li-ion cells are reaching their maximum energy storage capability (about 250 Wh/kg) and yet are still unable to provide a safe, low-cost battery with storage sufficient for electric vehicles with 100 or more mile ranges. A new generation of batteries with energy densities of at least 400 Wh/kg, low cost (less than $125/kWh), excellent safety, and low environmental impact is urgently needed.

On safety and environmental fronts, solid state batterieps are among the highest performers. All-solid-state Li-ion batteries can possess high energy densities (greater than 400 Wh/kg) and very good safety properties due to the lack of liquid electrolyte. Up to now, key factors inhibiting the commercialization of solid-state-cells are the voltage and/or chemical instabilities of common solid electrolytes against oxidizing cathodes during cycling. These instabilities can be mitigated via use of a cathode particle coating.

Most common coatings involve a simple layer of inorganic metal oxide processed by vapor phase deposition - such as physical vapor deposition (PVD), chemical vapor deposition (CVD), or atomic layer deposition (ALD) - or wet coating. Many function adequately, but the surface properties of these coatings are hard to control, and interfaces between these and catholyte systems are frequently highly resistive.

Cho et al. (Journal of Power Sources Vol. 282, pp. 45-50 (2015)) discloses a surface coating of SiO₂ applied to a LiNi_{0.6}Co_{0.2}Mn_{0.2}O₂ cathode material in a bid, through a wet process using nano-sized SiO₂ powder.

Hou et al. (Electrochemistry Communications Vol. 49, pp. 83-87 (2014)) discloses surface modification of Li-rich layered oxide particles with P₂O₅ through a gas-solid reaction.

US 2012/0021298 A1 discloses a positive electrode of a solid lithium ion secondary battery including core particles and a coated layer at least partially covering the surfaces of the core particles, wherein the core particles comprise a layered lithium composite oxide and the coated layer comprises a metal compound.

US 2016/0301063 A1 discloses a method for producing surface-treated oxide particles which can be used in an active-material layer for a positive electrode or a negative electrode in a storage battery, oxide particles in which an alkaline compound is contained in a part or the whole area of the surface of each of the particles are brought into contact with a gas containing a volatile acidic compound to produce a neutralization product by a gas phase reaction, thereby producing surface treated oxide particles in which the neutralization product is contained.

WO 2015/190250 A1 discloses lithium-nickel composite oxide particles coated with a polymer or copolymer comprising one or more types selected from a group consisting of a modified polyolefin resin, a polyester resin, a polyphenol resin, a polyurethane resin, an epoxy resin, a silane-modified polyether resin, a silane-modified polyester resin, a silane-modified polyphenol resin, a silane-modified polyurethane resin, a silane-modified epoxy resin, and a silane-modified polyamide resin, for use in a lithium-ion battery positive electrode active material.

US 2013/0302681 A1 discloses a cathode active material comprising a lithium nickel manganese composite oxide with a spinel structure, wherein the cathode active material is surface-coated with a silane compound.

Hexamethyldisilazane is a well-known compound.

US 2014/050980 A1 discloses a negative electrode active material comprising a core including a carbon-based material, and an organic polymer coating layer formed of a polymer compound.

### SUMMARY

The present invention provides a cathode active material according to claim 1, a solid state or gel battery according to claim 6, and usage of the battery according to claim 8.

### BRIEF DESCRIPTION OF THE DRAWINGS

FIG.1 shows a schematic drawing of a lithium-ion cell according to the present disclosure.
FIG. 2 shows a synthetic approach to a first generation solid lithium electrolyte based on a (proteo)phenylborate monomer. The depicted reaction scheme can be used for tetraarylborate Li-ionic conductor polymerization.

### DETAILED DESCRIPTION

Before any embodiments are explained in detail, it is to be understood that embodiments are not limited in their application to the details of construction and the arrangement of components set forth in the following description or illustrated in the following drawings. Other embodiments are possible and capable of being practiced or of being carried out in various ways.

### Definitions

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of embodiments. The materials, methods, and examples disclosed herein are illustrative only and not intended to be limiting.

The terms "comprise(s)," "include(s)," "having," "has," "can," "contain(s)," and variants thereof, as used herein, are intended to be open-ended transitional phrases, terms, or words that do not preclude the possibility of additional acts or structures. The singular forms "a," "an" and "the" include plural references unless the context clearly dictates otherwise. The present disclosure also contemplates other embodiments "comprising," "consisting of" and "consisting essentially of," the embodiments or elements presented herein, whether explicitly set forth or not.

The modifier "about" used in connection with a quantity is inclusive of the stated value and has the meaning dictated by the context (for example, it includes at least the degree of error associated with the measurement of the particular quantity). The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4.

The conjunctive term "or" includes any and all combinations of one or more listed elements associated by the conjunctive term. For example, the phrase "an apparatus comprising A or B" may refer to an apparatus including A where B is not present, an apparatus including B where A is not present, or an apparatus where both A and B are present. The phrase "at least one of A, B,...and N" or "at least one of A, B,...N, or combinations thereof' are defined in the broadest sense to mean one or more elements selected from the group comprising A, B,...and N, that is to say, any combination of one or more elements A, B,...or N including any one element alone or in combination with one or more of the other elements, which may also include, in combination, additional elements not listed.

For purposes of this disclosure, the chemical elements are identified in accordance with the Periodic Table of the Elements (CAS version), and the Handbook of Chemistry and Physics (98th Ed., inside cover).

### Solid State Batteries

In one aspect, embodiments relate to solid state batteries, in particular to solid state batteries with soft (e.g., polymeric or sulfidic) electrolytes. In another aspect, a battery made from the active materials described herein is provided.

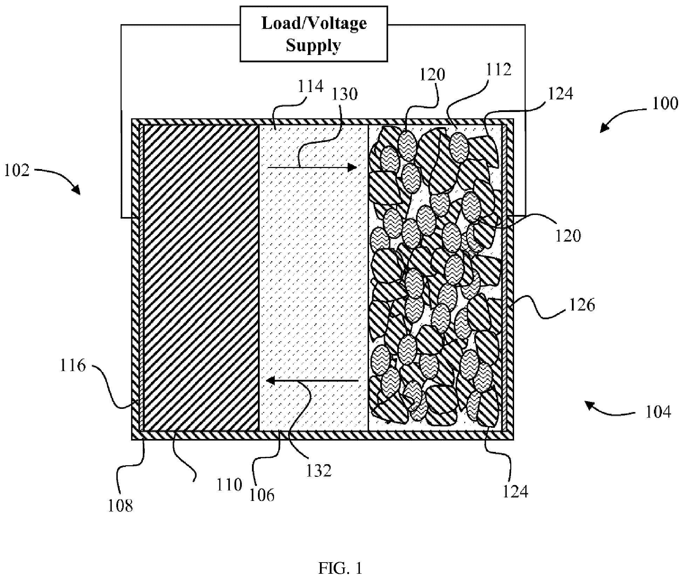

Figure 1 depicts an embodiment of a lithium-ion cell **100,** which includes a negative electrode **102** (anode), a positive electrode **104** (cathode), and a separator region **106** between the negative electrode **102** and the positive electrode **104.** The negative electrode **102,** positive electrode **104,** and separator region **106** are contained within a pouch **108.** The negative electrode **102** includes an active material plate **110,** which includes active material into which lithium can be inserted along with inert materials, and a current collector **116.**

In one embodiment, the separator region **106** includes an electrolyte **114** (including a catholyte region) with a lithium cation and serves as a physical and electrical barrier between the negative electrode **102** and the positive electrode **104,** so that the electrodes are not electronically connected within the cell **100** while allowing transfer of lithium ions between the negative electrode **102** and the positive electrode **104.**

In another embodiment, the positive electrode **104** includes a cathode layer as described herein and a current collector **126.** In certain embodiments, the cathode current collector **126** is Al-foil.

In certain embodiments, the solid electrolyte separator is: a) a solid polymer electrolyte, (block)-copolymer separator (e.g. polystyrene-poly(ethylene oxide) (PS-PEO)), and/or solid polyelectrolytes mixed optionally with ceramic powders or nanowires; b) a ceramic thin layer prepared such as by sputtering (e.g. lithium phosphorous oxy-nitride (LiPON)); or c) a "free standing" ceramic or glass ceramic layer (e.g. lithium aluminum titanium phosphate (LATP)). The separator can be some combination of these components (mixtures or alternating layers).

The lithium-ion cell **100** operates in a manner similar to the lithium-ion battery cell disclosed in U.S. Patent No. 7,726,975, filed on June 28, 2006. In general, electrons are generated at the negative electrode **102** during discharging and an equal amount of electrons are consumed at the positive electrode **104** as lithium and electrons move in the direction of the arrow **130** of Figure 1.

In the ideal discharging of the cell **100,** the electrons are generated at the negative electrode **102** because there is extraction via oxidation of lithium ions from the active material **110** of the negative electrode **102,** and the electrons are consumed at the positive electrode **104** because there is reduction of lithium ions into the active material **120** of the positive electrode **104.** During discharging, the reactions are reversed, with lithium and electrons moving in the direction of the arrow **132.**

In yet another embodiment, a cell stack comprises (1) a cathode current collector, which may have an optional surface treatment (e.g., carbon coating); (2) a cathode layer as described herein; (3) a solid electrolyte separator; (4) an anode layer; and optionally (5) an anode current collector. In certain embodiments, the cathode electrolyte may be the same or different as the electrolyte separator and/or the anode electrolyte. In certain embodiments, the electrolyte separator may be the same or different as the anode electrolyte.

In certain embodiments, the lithium-ion cell (battery) is preferably operated at voltages greater than 3.5 V.

### Anode

In one embodiment, the negative electrode **102** may be provided in various alternative forms. For example, the negative electrode **102** may incorporate dense Li metal or a Li metal alloy. Incorporation of Li metal is desired since the Li metal affords a higher specific energy than graphite.

In certain embodiments, the anode layer is: a) lithium metal, an electronically conductive foil (such as copper) that may be covered by a thin layer of Li metal (e.g., less than 20 µm), or a 3D structure (e.g., copper foil with conductive fibers) filled with lithium metal; orb) a composite electrode consisting of a mixture of active material (e.g. graphite, hard carbon, Li₄Ti₅O₁₂, Si, Sn, or intermetallic compounds), an ionically conductive electrolyte (e.g., solid or liquid electrolytes described below), and/or an electronically conductive additive (as described below), and optionally polymeric binder (e.g., polyvinylidene fluoride (PVDF) or styrenebutadiene rubber (SBR)).

In some embodiments, the anode current collector is Cu-foil, which is optionally surface treated.

### Cathode

In certain embodiments, a cathode **104** comprises a functionalized cathode active material **120** as described herein, a Li-ion conducting electrolyte **112,** and an electronically conductive additive **124.** In certain embodiments, the conductive additive **124** is carbon black, carbon fiber, or graphite.

The suitable cathode material comprises 1) a Li-intercalation material (such as lithium nickel cobalt aluminum oxide (NCA) or lithium nickel cobalt manganese oxide (NCM)); (2) a coating on the lithium intercalation material, comprising SiO₂; and (3) a silane compound which is bound to the coating via a covalent bond, wherein the silane compound is formed from (tridecafluoro-1,1,2,2-tetrahydrooctyl)trichlorosilane, trialkoxysilane, or (4-bromophenyl)trimethoxysilane.

In certain embodiments, the cathode composition comprises about 60 to about 85 weight percent or about 50 to about 70 weight percent cathode active material; up to about 15 weight percent or about 3 to about 10 weight percent conductive additive; and about 15 to about 35 weight percent or about 20 to about 40 weight percent electrolyte.

The cathode may be prepared, for example, by a simple slurry process, mixing conductive additive and active material together with polymer and lithium salt in an adequate solvent, followed by doctor blading or tape casting the desired electrode.

The cathode active material comprises lithium-insertion materials, such as a lithium metal oxide (Li*ₓ*MO₀), where M is a transition metal, such as Ni, Co, Mn, and Al, and where *x* is from 0 to 1. *Lithium Intercalation Material*

The terms "lithium-insertion material," "lithium intercalation material," and "Li-intercalation material" are used interchangeably herein.

Suitable lithium-insertion materials include lithium nickel manganese cobalt oxide (NMC) (LiNiMnCoO₂), lithium-rich NMC, lithium nickel manganese oxide (LiNi_{0.5}Mm_{1.5}O₄), lithium-rich layered oxides, lithium cobalt oxide (LiCoO₂), lithium iron phosphate (LiFePO₄), lithium manganese oxide (LiMn₂O₄), lithium nickel cobalt aluminum oxide (NCA) (LiNiCoAlO₂), and combinations thereof.

In a particular embodiment, NCA or NCM811 (LiNi_{0.8}Co_{0.2}Mn_{0.2}O) is coated with SiO₂ via atomic layer deposition, such as can be currently purchased from vendors like Pneumaticoat, Inc. In another embodiment, SiO₂ is coated onto an active material via a wet chemical nanopowder approach, such as described in Journal of Power Sources 282 (2015) 45-50.

To improve the hydroxyl density of the SiO₂ surface, the SiO₂-coated particles may be subsequently treated with oxygen plasma, UV-ozone, or with a Piranha-type solution (a mixture of sulfuric acid and hydrogen peroxide). This coated cathode material is then functionalized with tridecafluoro-1,1,2,2-tetrahydrooctyl)trichlorosilane, such as by exposure to an open vial or dish of this material in a shaking pan in a low vacuum (about or greater than 5 torr), or in a stirred solution of aqueous alcohol.

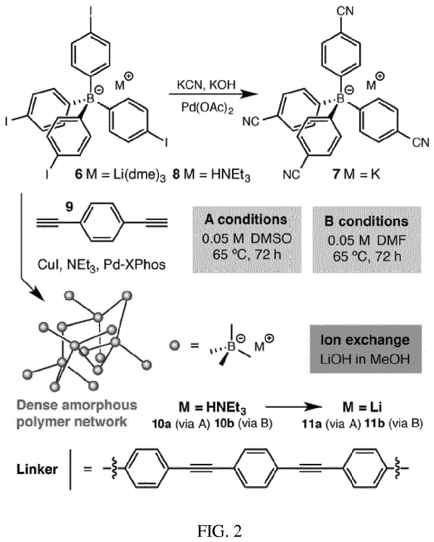

In a particular embodiment, the NCA or NCM811 is prepared with silica as described before. However, instead of the fluorinated alkyl silane, (4-bromophenyl)trimethoxysilane is attached to the silica-coated cathode powder. This material so coated can then be introduced to the reactions described in Humbeck et al., "Tetraarylborate polymer networks as single-ion conducting solid electrolytes," Chem. Sci. 2015, 6, 5499-5505 (DOI: 10.1039/c5sc02052b) to polymerize active material into an arylborate-based Li-ion conducting network (Figure 2). The subsequent product can be milled or ground if required to achieve a powder with a polymeric Li-ionic conductive coating bonded to a SiO₂-coated NCA or NCM active material core.

### Coating

The coating on the lithium intercalation material comprises SiO₂.

In certain embodiments, the coating may have a thickness of up to about 500 nm. The coating may have a thickness of less than about 50 nm. The coating may have a thickness of less than about 25nm. The coating may have a thickness of about 0.1 to about 15 nm. The coating may have a thickness of about 0.1 to about 25 nm.

All embodiments provide a silane compound bound to the coating.

The silane compound is formed from tridecafluoro-1,1,2,2-tetrahydrooctyl)trichlorosilane, which can bond with SiO₂ following hydrolysis and provides a relatively voltage-stable, hydrophobic buffer layer; or the silane compound may be a trialkoxysilane capable of condensing to form a relatively voltage-stable polysiloxane on the particle surface; or the silane compound may be (4-bromophenyl)trimethoxysilane, which could similarly bond with SiO₂ via the silane and subsequently be subject to further reaction, e.g., with Sonogashira coupling, to Li-ion conducting polymers.

Suitably, the bond between the moiety and the coating is covalent. In certain embodiments, the moiety may be used to tune the voltage stability, surface energy, and/or interfacial resistance between the cathode material and the battery electrolyte (catholyte).

### Electrolyte

As used herein, catholyte refers to a portion of the electrolyte adjoining the cathode. The catholyte material can include, but is not limited to, polyethylene oxide (PEO), polyelectrolytes, sulfidic glass, etc.

In certain embodiments, the Li-ion conducting electrolyte is a sulfidic ceramic or glass (e.g., Li₃PS₄, Li₁₀GeP₂S₁₂, Li₇P₂S₈I, or related compositions), an oxide ceramic (e.g., (Li,La)TiO₃, LiM_{IV2}(PO₄)₃ (M_{IV}=Ti, Zr, Ge), Li₅La₃M₂O₁₂ (M=transition metal)), or polymer-based (e.g., PEO with bis(trifluoromethane)sulfonimide lithium salt (LiTFSI) in a concentration range between 0.1 and 2 M), or combinations of the above.

Suitably the Li-ion conducting electrolyte is a PEO or PEO-based polymer with a lithium salt, such as LiTFSI, or a single-ion conducting polymer, optionally containing a plasticizer, or a polyacrylonitrile (PAN)/Lithium salt (LiClO₄), or a polymer-ceramic composite such as PAN/lithium lanthanum titanium oxide (LLTO)/Li salt.

Various types of electrolyte are available, including solid polymers, glass-ceramic electrolytes, and other suitable electrolyte.

### Advantages

One aspect provides a technology to create cathodes with high-V capability, high rate capability, and/or low capacity fade by adding a functionalizable substrate and a functional linker to common cathode active material particles.

Another aspect provides several cathode materials and designs, which can combine high energy density with high conductivity, low interfacial resistances, and high thermal and voltage stability. Without wanting to be limited by theory, use of these cathodes may lead to increased discharge capacity, especially over time, because they are resistant to thermal, chemical, and/or electrochemical degradation mechanisms that trouble otherwise comparable materials. In another aspect, embodiments therefore affect an important component of the cell - enabling improved reversibility/rechargeability, roundtrip efficiency, energy, and life time of the cell.

In a particular embodiment, solid state batteries according to the present disclosure include a solid state Li-ion cell with a modified cathode material, which may possess a high chemical and voltage stability relative to a given catholyte. The cathode material may also have high lithium-ion areal conductance, and low interfacial impedance with both the active material particles and the electrolyte. The cathode material may also have favorable cost and manufacturability. Additionally, in certain embodiments, for achievement of high energy density, the volume and weight fraction of catholyte relative to active material must be kept small.

In a particular embodiment, without wanting to be limited by theory, the cathode provides superior performance in the form of:
(1) high energy density - such as a gravimetric energy density greater than about 700 Wh/kg at the material level and/or greater than about 250 Wh/kg at the cell level; and/or volumetric energy density greater than about 3000 Wh/L at the material level and/or greater than about 700 Wh/L at the cell level - and/or high rate capability - such as greater than about 1 C pulse discharge (10 seconds at 20% state of charge (SOC)) capability and/or charging to 75% SOC in less than about 30 minutes, suitably greater than about 3 C pulse discharge capability and/or charging to 75% SOC in less than about 15 minutes - due to low interfacial resistance between a catholyte and an active material; and/or
(2) high cycle life - such as greater than about 500 cycles with at least about 80% of the initial cell capacity retained, more suitably, greater than about 2000 cycles with at least about 80% of the initial cell capacity retained - due to reduced voltage-induced degradation of polymeric catholytes.

Various features, advantages, and embodiments are set forth in the following claims.

## Claims

1. A cathode active material (120) comprising:
(1) a lithium intercalation material;
(2) a coating on the lithium intercalation material, comprising SiO₂; and
(3) a silane compound which is bound to the coating via a covalent bond, wherein the silane compound is formed from (tridecafluoro-1,1,2,2-tetrahydrooctyl)trichlorosilane, trialkoxysilane, or (4-bromophenyl)trimethoxysilane.

2. The cathode active material (120) of claim 1, wherein the lithium intercalation material is selected from lithium nickel cobalt aluminum oxide (NCA) and lithium nickel cobalt manganese oxide (NCM).

3. The cathode active material (120) of claim 1, wherein the lithium intercalation material is coated partially or fully with silica.

4. The cathode active material (120) of claim 1, wherein the coating has a thickness of 0.1 to 15 nm.

5. The cathode active material (120) of claim 1, wherein the coating has functional groups formed by treatment with oxygen plasma, UV-ozone, or a Piranha-type solution.

6. A solid state or gel battery (100) comprising the cathode active material (120) of claim 1.

7. The battery (100) of claim 6, further comprising a polymeric electrolyte (114).

8. Usage of the battery (100) of claim 6, for operation at voltages greater than 3.5V.

## Patentansprüche

1. Kathodenaktivmaterial (120), umfassend:
(1) ein Lithium-Interkalationsmaterial;
(2) eine Beschichtung auf dem Lithium-Interkalationsmaterial, die SiO₂ umfasst; und
(3) eine Silanverbindung, die über eine kovalente Bindung an die Beschichtung gebunden ist, wobei die Silanverbindung aus (Tridecafluor-1,1,2,2- tetrahydrooctyl)trichlorsilan, Trialkoxysilan oder 4-Bromphenyl)trimethoxysilan gebildet ist.

2. Kathodenaktivmaterial (120) nach Anspruch 1, wobei das Lithium-Interkalationsmaterial aus Lithiumnickelcobaltaluminiumoxid (NCA) und Lithiumnickelcobaltmanganoxid (NCM) ausgewählt ist.

3. Kathodenaktivmaterial (120) nach Anspruch 1, wobei das Lithium-Interkalationsmaterial teilweise oder vollständig mit Siliciumdioxid beschichtet ist.

4. Kathodenaktivmaterial (120) nach Anspruch 1, wobei die Beschichtung eine Dicke von 0,1 bis 15 nm aufweist.

5. Kathodenaktivmaterial (120) nach Anspruch 1, wobei die Beschichtung durch Behandlung mit Sauerstoffplasma, UV-Ozon oder einer Lösung von Piranha-Typ gebildete funktionelle Gruppen aufweist.

6. Festkörper- oder Gelbatterie (100), umfassend das Kathodenaktivmaterial (120) nach Anspruch 1.

7. Batterie (100) nach Anspruch 6, ferner umfassend einen polymeren Elektrolyt (114).

8. Verwendung der Batterie (100) nach Anspruch 6 zum Betrieb bei Spannungen von mehr als 3,5 V.

## Revendications

1. Matériau actif de cathode (120) comprenant :
(1) un matériau d'intercalation de lithium ;
(2) un revêtement sur le matériau d'intercalation de lithium, comprenant SiO₂ ; et
(3) un composé de type silane qui est lié au revêtement via une liaison covalente, le composé de type silane étant formé du (tridécafluoro-1,1,2,2-tétrahydrooctyl)trichlorosilane, d'un tri-alcoxysilane, ou du (4-bromophényl)triméthoxysilane.

2. Matériau actif de cathode (120) selon la revendication 1, le matériau d'intercalation de lithium étant choisi parmi l'oxyde d'aluminium cobalt nickel lithium (NCA) et l'oxyde de manganèse cobalt nickel lithium (NCM).

3. Matériau actif de cathode (120) selon la revendication 1, le matériau d'intercalation de lithium étant revêtu partiellement ou totalement par une silice.

4. Matériau actif de cathode (120) selon la revendication 1, le revêtement ayant une épaisseur de 0,1 à 15 nm.

5. Matériau actif de cathode (120) selon la revendication 1, le revêtement ayant des groupes fonctionnels formés par traitement par plasma d'oxygène, UV-ozone, ou une solution de type Piranha.

6. Batterie à l'état solide ou en gel (100) comprenant le matériau actif de cathode (120) selon la revendication 1.

7. Batterie (100) selon la revendication 6, comprenant en outre un électrolyte polymérique (114).

8. Utilisation de la batterie (100) selon la revendication 6, pour un fonctionnement à des tensions supérieures à 3,5 V.
